# EUROPEAN PATENT APPLICATION

(11) **EP 4 844 871 A1**
(43) Date of publication of application: **25.11.2026**
(21) Application number: 25857520.8
(22) Date of filing: 22.08.2025
(51) Int. Cl.: H01M 10/0567, H01M 10/42, H01M 50/451, H01M 50/417, H01M 50/46, H01M 50/491, H01M 10/0569, H01M 10/0568, H01M 10/052

(54) **COMPOSITE ELECTROLYTE AND BATTERY**

(30) Priority: 22.08.2024 KR 20240112552
(71) Applicant: LG Chem, Ltd., Seoul 07336 (KR)
(72) Inventor: KIM, Su Jun, Seoul 07796 (KR); LEE, Seongsoo, Seoul 07796 (KR); CHOI, Kwangwook, Seoul 07796 (KR); LEE, Kyoungsoo, Seoul 07796 (KR)
(74) Representative: Hoffmann Eitle
(86) International application number: PCT/KR2025/012827
(87) International publication number: WO 2026/043332

(57) **Abstract**

The present invention relates to a composite electrolyte and a battery, and may comprise a substrate layer; and an active layer disposed on one side or both sides of the substrate layer and comprising first inorganic particles and second inorganic particles, wherein the true density of the first inorganic particles may be equal to or less than the true density of the second inorganic particles.

## Description

### TECHNICAL FIELD

The present document claims the benefit of priority based on Korean Patent Application No. 10-2024-0112552 filed with the Korean Intellectual Property Office on August 22, 2024, the entire contents of which are incorporated herein by reference.

The present invention relates to a composite electrolyte.

The present invention relates to a battery.

### BACKGROUND ART

An inorganic-coated separator is considered as one of the technologies for suppressing the risk of battery ignition due to the use of liquid electrolytes. The inorganic-coated separator may comprise a porous substrate layer and inorganic particles coated on the outside of the porous substrate layer. The inorganic particles used in the inorganic-coated separator may form a dense pore structure following the interstitial volume. The pore structure may be related to the impregnation amount of the electrolyte solution. The impregnation amount of the electrolyte solution may be related to the amount of free electrolyte. The amount of free electrolyte may be related to the risk of battery ignition.

In addition, it is required that the interfacial resistance of the separator is reduced and the ionic conductivity thereof is increased.

### DISCLOSURE OF INVENTION

### TECHNICAL PROBLEM

The present invention aims to provide a composite electrolyte exhibiting improved mechanical properties, thermal properties, and ionic conductivity.

The present invention aims to provide a battery exhibiting improved safety.

### SOLUTION TO PROBLEM

An embodiment of the present invention is a composite electrolyte comprising a substrate layer; and an active layer disposed on one side or both sides of the substrate layer and comprising a curable composition, wherein the curable composition comprises first inorganic particles, second inorganic particles, a binder, a crosslinking agent, an initiator, and an electrolyte solution, and the true density of the first inorganic particles is equal to or less than the true density of the second inorganic particles.

The green density of the first inorganic particles may be greater than the green density of the second inorganic particles, and the total content [wt%] of the first inorganic particles and the second inorganic particles in the curable composition may be greater than the binder content [wt%] in the curable composition.

The active layer may comprise a cured product of the curable composition.

The content of the second inorganic particles in the curable composition may be 5 wt% or more of the total content of the first inorganic particles and the second inorganic particles in the curable composition.

The average size of the first inorganic particles may be in a range of 100 nm to 500 nm, the average longitudinal length of the second inorganic particles may be in a range of 300 nm to 800 nm, and the average transverse length of the second inorganic particles may be in a range of 25 nm to 80 nm.

The binder may comprise a fluorine-based binder.

The fluorine-based binder may comprise a first unit derived from vinylidene fluoride and a second unit derived from a fluorine-containing alkyl vinyl compound, the content of the second unit of the fluorine-based binder may be in a range of 10 wt% to 50 wt%, and the weight average molecular weight of the fluorine-based binder may be in a range of 300,000 g/mol to 1,000,000 g/mol.

The crosslinking agent may comprise a polyfunctional (meth)acrylate.

The initiator may comprise a photopolymerization initiator.

The electrolyte solution may comprise a non-aqueous solvent, a lithium salt, and an electrolyte additive, wherein the non-aqueous solvent may comprise ethylene carbonate and ethyl methyl carbonate, the lithium salt may comprise LiN(CF₃SO₂)₂, and the electrolyte additive may comprise vinylene carbonate.

Another embodiment of the present invention is a composite electrolyte comprising a substrate layer; and an active layer disposed on one side or both sides of the substrate layer, wherein the active layer comprises first inorganic particles, second inorganic particles, a polymeric crosslinked structure, and an electrolyte solution impregnated in the polymeric crosslinked structure, and the true density of the first inorganic particles is equal to or less than the true density of the second inorganic particles.

The substrate layer may comprise a porous polyolefin-based film.

The first inorganic particles may comprise a lithium aluminum titanium phosphate (LATP)-based compound, and the second inorganic particles may comprise boehmite (AlO(OH)).

The first inorganic particles may be polygonal inorganic particles, and the second inorganic particles may be plate-shaped inorganic particles or needle-shaped inorganic particles.

The thickness per layer of the active layer may be greater than the thickness of the substrate layer.

Another embodiment of the present invention is a battery comprising a first electrode, a second electrode, and a composite electrolyte disposed between the first electrode and the second electrode, comprising a substrate layer; and an active layer disposed on one side or both sides of the substrate layer, wherein the active layer comprises first inorganic particles, second inorganic particles, a first polymeric crosslinked structure, and a first electrolyte solution impregnated in the first polymeric crosslinked structure, and the true density of the first inorganic particles is equal to or less than the true density of the second inorganic particles.

The battery may further comprise an electrolyte layer disposed between the first electrode and the active layer, between the second electrode and the active layer, or between the first electrode and the active layer and between the second electrode and the active layer, wherein the electrolyte layer may comprise a second polymeric crosslinked structure and a second electrolyte solution impregnated in the second polymeric crosslinked structure.

The first electrode may comprise a first electrode current collector and a first electrode active material layer disposed on one side or both sides of the first electrode current collector, the second electrode may comprise a second electrode current collector and a second electrode active material layer disposed on one side or both sides of the second electrode current collector, the first electrode active material layer may comprise a first electrode active material, a second polymeric crosslinked structure, and a second electrolyte solution impregnated in the second polymeric crosslinked structure, and the second electrode active material layer may comprise a second electrode active material, a second polymeric crosslinked structure, and a second electrolyte solution impregnated in the second polymeric crosslinked structure.

The first electrode may comprise a first electrode current collector, a positive electrode active material layer disposed on one side of the first electrode current collector, and a negative electrode active material layer disposed on the other side of the first electrode current collector, the second electrode may comprise a second electrode current collector, a positive electrode active material layer disposed on one side of the second electrode current collector, and a negative electrode active material layer disposed on the other side of the second electrode current collector, and the composite electrolyte may be disposed between the positive electrode active material layer of the first electrode and the negative electrode active material layer of the second electrode, between the negative electrode active material layer of the first electrode and the positive electrode active material layer of the second electrode, or between the positive electrode active material layer of the first electrode and the negative electrode active material layer of the second electrode and between the negative electrode active material layer of the first electrode and the positive electrode active material layer of the second electrode.

The battery may further comprise an electrolyte layer disposed between the first electrode and the active layer, between the second electrode and the active layer, or between the first electrode and the active layer and between the second electrode and the active layer, wherein the electrolyte layer may comprise a second polymeric crosslinked structure and a second electrolyte solution impregnated in the second polymeric crosslinked structure.

### ADVANTAGEOUS EFFECTS OF INVENTION

The composite electrolyte of the present invention can exhibit improved mechanical properties, thermal properties, and ionic conductivity.

The battery of the present invention can exhibit improved safety.

### BRIEF DESCRIPTION OF THE DRAWINGS

FIG. 1 is a schematic view of an exemplary battery of the present invention.
FIG. 2 is a schematic view of another exemplary battery of the present invention.
FIG. 3 is a schematic view of yet another exemplary battery of the present invention.
FIG. 4 is a schematic view of yet another exemplary battery of the present invention.
FIG. 5 is an SEM image of the first inorganic particles used in an Example of the present invention.
FIG. 6 is an SEM image of the second inorganic particles used in an Example of the present invention.
FIG. 7 is an SEM image of another second inorganic particles used in an Example of the present invention.

### BEST MODE FOR CARRYING OUT THE INVENTION

The present document may use ordinal numbers such as "first" and "second" to refer to a plurality of components. Here, there is no priority among the components.

In the present document, when a specific commercial product is used as a certain component, the properties of the component may refer to the properties described in the technical data sheet (TDS) or the certificate of analysis (COA) of the product.

In the present document, when the physical properties of a specific material vary depending on temperature and pressure, the measurement criteria of the property may be 25 °C and 101.325 kPa.

In the present document, the numerical range of "A to B" means "A or more and B or less".

The numerical values mentioned in the present document are rounded values. For example, 1.5 is a number within the range of 1.45 to 1.54.

Hereinafter, the present document describes the present invention in more detail.

An embodiment of the present invention is a composite electrolyte.

The composite electrolyte of the present invention may comprise a polymer component, an electrolyte solution, and inorganic particles. The electrolyte solution may be impregnated in the polymer component. The inorganic particles may be composited in the polymer component.

The composite electrolyte of the present invention may comprise a substrate layer and an active layer. The active layer may be disposed on one side or both sides of the substrate layer. The substrate layer may comprise a first side and a second side facing the first side. The active layer may be disposed on the first side, the second side, or both the first and second sides of the substrate layer.

The substrate layer may be porous. A fluid may move from one side of the substrate layer to the other side through the pores of the substrate layer. The substrate layer may comprise a porous polyolefin-based film.

Here, the polyolefin-based porous film means a porous film comprising a polyolefin-based resin as a main component.

The polyolefin-based porous film may comprise the polyolefin-based resin in an amount of 50 vol% or more, 90 vol% or more, or 95 vol% or more of the entire material constituting the polyolefin-based porous film.

The weight average molecular weight of the component contained in the polyolefin-based resin may be 3×10⁵ to 15×10⁶. When the weight average molecular weight of the component contained in the polyolefin-based resin is 1,000,000 or more, the strength of the separator comprising the polyolefin porous film may be improved.

The polyolefin-based resin may comprise a thermoplastic resin. The thermoplastic resin may comprise a homopolymer (for example, polyethylene, polypropylene, polybutene) or a copolymer (for example, ethylene-propylene copolymer) formed by polymerizing monomers such as ethylene, propylene, 1-butene, 4-methyl-1-pentene, and 1-hexene.

The polyolefin-based porous film may be a layer comprising these polyolefin-based resins alone, or a layer comprising two or more of these polyolefin-based resins. Among them, polyethylene and high-molecular-weight polyethylene having ethylene as the main backbone can block (shut down) the flow of excessive current at a lower temperature. In addition, the polyolefin-based porous film may further comprise components other than the polyolefin-based resin that do not impair the function of the film.

The active layer may comprise a polymer component and an electrolyte solution. The electrolyte solution may be impregnated in the polymer component. The electrolyte solution may swell the polymer component. The polymer component may swell to exhibit a gel phase.

The active layer may comprise a curable composition. Specifically, the active layer may be formed by curing the curable composition. The active layer may comprise a cured product of the curable composition. The curing method may include, for example, thermal curing, photo-curing, and thermal-photo dual curing. Preferably, the curing method may be photo-curing.

The cured product of the composition may mean a product that has undergone a chemical process in which the composition becomes hard or solidified as the structure of the components contained in the composition changes due to chemical reactions between the components. The curing may be different from drying, which is a physical process in which a part of the composition dries or hardens as some components contained in the composition (for example, solvents such as water, volatile components) evaporate.

The curable composition may comprise a binder, inorganic particles, and an electrolyte solution. When the curable composition is cured, the binder may form a polymer component. The electrolyte solution may be impregnated in the polymer component. The polymer component may be a polymeric crosslinked structure.

The curable composition may further comprise a crosslinking agent and an initiator. When the curable composition is cured, the crosslinking agent may connect between the crosslinking agents, between the binders, and between the crosslinking agent and the binder to form a polymeric crosslinked structure. When an external force (heat, light, or heat and light) for curing the curable composition is applied, the initiator can start the crosslinking reaction between the binder and the crosslinking agent.

In the composite electrolyte of the present invention, the curable composition may comprise different inorganic particles. Specifically, the curable composition may comprise first inorganic particles and second inorganic particles. The first inorganic particles and the second inorganic particles may differ in particle size, particle shape, and density. The true density of the first inorganic particles may be the same as or different from the true density of the second inorganic particles. The true density of the first inorganic particles may be equal to or less than the true density of the second inorganic particles.

A composite electrolyte having an active layer comprising a cured product of a curable composition comprising different inorganic particles in this manner can exhibit improved mechanical properties, thermal properties, and ionic conductivity.

Although the detailed mechanism is not certain, the following is presumed. The inorganic particles can impart rigidity and heat resistance to the composite electrolyte to improve the mechanical and thermal properties of the composite electrolyte. When a plurality of inorganic particles having different densities are included, heavier particles can form a skeleton in the lower part of the active layer, and lighter particles can fill the upper part of the active layer or the gaps formed by the heavier particles, and in this process, a uniform pore structure can be formed inside the active layer. The uniform pore structure can increase the electrolyte impregnation property of the active layer and the ionic conductivity of the composite electrolyte.

In the present document, the uniform pore structure may mean a structure in which the average size, shape, and density of the pores are almost constant regardless of the position of the layer, so that the material movement path inside the layer can be maintained constant. The uniform pore structure may mean a state in which the size distribution and spatial distribution variation of the pores throughout the active layer comprising the pores are small, the pores are continuously connected to each other, and the pores are not localized in a specific direction or position.

In the present document, the true density of a particle may mean a density calculated only from the mass and volume of the particle itself, excluding the void inside the particle. The true density of the inorganic particles may be a value known for the inorganic particles or a value measured according to a known method. The true density of the inorganic particles may be determined depending on the chemical composition of the inorganic particles.

The true density [g/cm³] of the first inorganic particles may be in a range of 1 to 3. Preferably, the true density [g/cm³] of the first inorganic particles may be in a range of 1.5 to 2.97. More preferably, the true density [g/cm³] of the first inorganic particles may be in a range of 2 to 2.95. Most preferably, the true density [g/cm³] of the first inorganic particles may be in a range of 2.5 to 2.93.

The true density [g/cm³] of the second inorganic particles may be in a range of 3 to 5. Preferably, the true density [g/cm³] of the second inorganic particles may be in a range of 3.02 to 4.

The properties of the first inorganic particles and the second inorganic particles may be further controlled to form a more uniform pore structure of the active layer.

The green density of the first inorganic particles may be greater than the green density of the second inorganic particles.

In the present document, the green density (compact density) of a particle may mean the density of the particle in a state of being processed into a compact of a predetermined shape. The green density is a density that reflects not only the density of the particle itself but also the voids between the particles. The method of measuring the green density of the inorganic particles is described in detail in the Examples.

That is, in the curable composition, the heavier inorganic particles may be disposed less densely, and the lighter inorganic particles may be disposed more densely. As a result, a structure in which of the heavier inorganic particles fill the pores formed by the lighter inorganic particles may be formed. When pores of uniform distribution are formed in the active layer, the impregnation amount of the electrolyte solution in the active layer may increase. As a result, the ionic conductivity of the composite electrolyte may increase.

The green density [g/cm³] of the first inorganic particles may be in a range of 1 to 3. Preferably, the green density [g/cm³] of the first inorganic particles may be in a range of 1.2 to 2.5. More preferably, the green density [g/cm³] of the first inorganic particles may be in a range of 1.3 to 2. Even more preferably, the green density [g/cm³] of the first inorganic particles may be in a range of 1.4 to 1.5.

The green density [g/cm³] of the second inorganic particles may be in a range of 1 to 3. Preferably, the green density [g/cm³] of the second inorganic particles may be in a range of 1.1 to 2.5. More preferably, the green density [g/cm³] of the second inorganic particles may be in a range of 1.15 to 2.1.

The relationship between the contents of the inorganic particles and the binder in the curable composition may be appropriately adjusted.

The curable composition may comprise the binder more than the inorganic particles. That is, among the inorganic particles, the binder, and the electrolyte solution comprised in the curable composition, excluding the electrolyte solution, the content of the binder may be higher than the content of the inorganic particles. In this case, the binder can sufficiently fill the gaps between the inorganic particles, so that an active layer with a uniform surface, increased adhesion, and mechanical strength can be prepared.

The curable composition may also comprise the inorganic particles more than the binder. That is, the total content of the first inorganic particles and the second inorganic particles in the curable composition may be greater than the binder content in the curable composition. In this case, the heat resistance and mechanical strength of the active layer can be increased, and the improvement range of the ionic conductivity, thermal, and mechanical properties due to the introduction of the inorganic particles can be further increased.

Here, the unit of content of the binder and the inorganic particles is wt%.

The total content of the first inorganic particles and the second inorganic particles in the curable composition may be in a range of 5 wt% to 60 wt%. That is, the total content of the first inorganic particles and the second inorganic particles may be in a range of 5 wt% to 60 wt% based on all the components constituting the curable composition.

Preferably, the content ratio between the first inorganic particles and the second inorganic particles may be determined considering the role of each inorganic particle. The first inorganic particles may be generally involved in the transport of lithium ions. The second inorganic particles may be generally applied to improve the heat resistance of the separator.

The content of the second inorganic particles in the curable composition may be 5 wt% or more of the total content of the first inorganic particles and the second inorganic particles in the curable composition. The content of the second inorganic particles may be 10 wt% or more, 15 wt% or more, 20 wt% or more, 25 wt% or more, or 30 wt% or more. The content of the second inorganic particles may be 50 wt% or less, 45 wt% or less, 40 wt% or less, 35 wt% or less, or 30 wt% or less.

The relationship between the true densities of the first inorganic particles and the second inorganic particles may be determined depending on the chemical composition of the compounds constituting the first inorganic particles and the second inorganic particles. The chemical composition of the compounds constituting the first inorganic particles and the second inorganic particles may be classified based on whether they are involved in the transport of lithium ions in the battery.

The first inorganic particles may be involved in the transport of lithium ions.

The first inorganic particles may comprise a lithium-containing metal oxide. The first inorganic particles may comprise at least one selected from the group consisting of a lithium aluminum germanium phosphate (LAGP)-based compound, a lithium lanthanum zirconium oxide (LLZO)-based compound, a lithium aluminum titanium phosphate (LATP)-based compound, a lithium lanthanum zirconium tantalum oxide (LLZTO)-based compound, a lithium silicon titanium phosphate (LSTP)-based compound, and a lithium oxide. Preferably, the first inorganic particles may comprise a lithium aluminum titanium phosphate (LATP)-based compound.

The second inorganic particles may not be involved in the transport of lithium ions.

The second inorganic particles may comprise a lithium-free metal oxide. The second inorganic particles may comprise at least one selected from the group consisting of zinc oxide (ZnO), calcium carbonate (CaCO₃), silicon dioxide (SiO₂), alumina (Al₂O₃), boehmite (Al(O)OH), barium titanate (BaTiO₃), barium sulfate (BaSO₄), and titanium dioxide (TiO₂). Preferably, the the second inorganic particles may comprise boehmite (Al(O)OH).

The relationship between the green densities of the first inorganic particles and the second inorganic particles may be determined depending on the shape and size of each of the first inorganic particles and the second inorganic particles. As described above, the shape of the first inorganic particles may be different from the shape of the second inorganic particles.

The first inorganic particles may be polygonal inorganic particles.

The second inorganic particles may be polygonal inorganic particles, needle-shaped inorganic particles, or plate-shaped inorganic particles. Preferably, the second inorganic particles may be needle-shaped inorganic particles or plate-shaped inorganic particles.

In the present document, polygonal particles may refer to polyhedron-shaped particles whose outline is composed of multiple straight lines. When the maximum length, maximum width, and maximum thickness of the polygonal particles are L, W, and T respectively, L/W and W/T may each be in a range of 1 to 3. The shape of the polyhedron constituting the polygonal particles is not particularly limited. The polygonal particles may be particles having a polyhedral shape and satisfying the conditions of the aforementioned L, W, and T.

In the present document, needle-shaped particles may refer to particles in a thin and long shape like a needle or fiber, whose length is much longer than the thickness or width. When the maximum length, maximum width, and maximum thickness of the needle-shaped particles are L, W, and T respectively, L/W or L/T may be 3 or more.

In the present document, plate-shaped particles may refer to particles in a flat shape like a plate, whose thickness is much thinner than the length or width. When the maximum length, maximum width, and maximum thickness of the plate-shaped particles are L, W, and T respectively, L/T or W/T may be 3 or more.

The size of each of the first inorganic particles and the second inorganic particles may also be adjusted considering the magnitude relationship between the true density and the green density of each inorganic particle.

The average size of the first inorganic particles may be in a range of 100 nm to 500 nm. Preferably, the average size of the first inorganic particles may be in a range of 200 nm to 450 nm. More preferably, the average size of the first inorganic particles may be in a range of 250 nm to 400 nm. Even more preferably, the average size of the first inorganic particles may be in a range of 300 nm to 350 nm.

The average size of the first inorganic particles may mean the average of the maximum length of each particle. The average size of the first inorganic particles may be measured using a known particle size analyzer. In addition, the average size of the first inorganic particles may be measured using an electron microscope image of the first inorganic particles. The average of the maximum length of each first inorganic particle confirmed in the electron microscope image with respect to the number of inorganic particles may be the average size of the first inorganic particles.

Preferably, the second inorganic particles are needle-shaped particles, and the transverse length and the longitudinal length of each of the second inorganic particles may be adjusted. The longitudinal length of the second inorganic particles may be longer than the transverse length of the second inorganic particles.

The average longitudinal length of the second inorganic particles may be in a range of 300 nm to 800 nm. The average transverse length of the second inorganic particles may be in a range of 25 nm to 80 nm.

Preferably, the average longitudinal length of the second inorganic particles may be in a range of 400 nm to 700 nm. More preferably, the average longitudinal length of the second inorganic particles may be in a range of 500 nm to 650 nm. Even more preferably, the average longitudinal length of the second inorganic particles may be in a range of 580 nm to 600 nm.

Preferably, the average transverse length of the second inorganic particles may be in a range of 35 nm to 70 nm. More preferably, the average transverse length of the second inorganic particles may be in a range of 40 nm to 60 nm. Even more preferably, the average transverse length of the second inorganic particles may be in a range of 45 nm to 50 nm.

The longitudinal length of the second inorganic particles may mean the maximum length of the second inorganic particles. The transverse length of the second inorganic particles may mean the longer length among the dimensions measured in the direction perpendicular to the longitudinal direction.

The average longitudinal length of the second inorganic particles may be measured using an electron microscope image of the second inorganic particles. The average of the maximum length of each second inorganic particle confirmed in the electron microscope image with respect to the number of inorganic particles may be the average longitudinal length of the second inorganic particles. In addition, the average of the length in the direction perpendicular to the maximum length of each second inorganic particle measured in the electron microscope image with respect to the number of inorganic particles may be the average transverse length of the second inorganic particles.

The binder may constitute the skeleton in the active layer formed by the curable composition. The binder has appropriate crystallinity and polarity, and can allow the composite electrolyte to exhibit appropriate ionic conductivity. In particular, the polar portion of the binder may bond with the crosslinking agent described later. At this time, the binder may form a crosslinked structure in the active layer.

The binder may comprise a fluorine-based binder. The fluorine-based binder may refer to a binder whose constituent unit comprises fluorine in part or in whole. The fluorine-based binder may comprise a PVDF-based binder.

The PVDF-based binder may be a homopolymer or copolymer comprising a polymerization unit derived from vinylidene fluoride. The fluorine-based binder may comprise a first unit derived from vinylidene fluoride and a second unit derived from a fluorine-containing alkyl vinyl compound. The PVDF-based binder may be a block copolymer or a random copolymer comprising the first unit and the second unit. Preferably, the PVDF-based binder may be a random copolymer comprising the first unit and the second unit.

The fluorine-containing alkyl vinyl compound may refer to a compound in which at least one fluorine-containing alkyl group represented by CₙH_{(2n+1-y})F_{y} is bonded to a vinyl group. However, vinylidene fluoride is excluded here.

The fluorine-containing alkyl vinyl compound may comprise at least one selected from the group consisting of vinyl fluoride, trifluoroethylene, tetrafluoroethylene, chlorotrifluoroethylene, and hexafluoropropylene. Preferably, the fluorine-containing alkyl vinyl compound may comprise at least one selected from the group consisting of hexafluoropropylene, tetrafluoroethylene, and chlorotrifluoroethylene. More preferably, the fluorine-containing alkyl vinyl compound may comprise hexafluoropropylene.

The content of the second unit of the fluorine-based binder may be adjusted. The content of the second unit of the fluorine-based binder may affect the crystallinity of the fluorine-based binder, and the ion conductivity and mechanical strength of the composite electrolyte.

The content of the second unit of the fluorine-based binder may be in a range of 10 wt% to 50 wt%. Preferably, the content of the second unit of the fluorine-based binder may be in a range of 20 wt% to 45 wt%. More preferably, the content of the second unit of the fluorine-based binder may be in a range of 25 wt% to 40 wt%. Even more preferably, the content of the second unit of the fluorine-based binder may be in a range of 30 wt% to 35 wt%.

The contents of the first unit and the second unit of the fluorine-based binder can be measured by 19F-NMR analysis of the fluorine-based binder.

The weight average molecular weight of the fluorine-based binder may also be adjusted. The weight average molecular weight of the fluorine-based binder may be in a range of 300,000 g/mol to 1,000,000 g/mol. Preferably, the weight average molecular weight of the fluorine-based binder may be in a range of 350,000 g/mol to 800,000 g/mol. More preferably, the weight average molecular weight of the fluorine-based binder may be in a range of 450,000 g/mol to 600,000 g/mol. Even more preferably, the weight average molecular weight of the fluorine-based binder may be in a range of 500,000 g/mol to 550,000 g/mol.

The weight average molecular weight of the fluorine-based binder can be measured by gel permeation chromatography.

The melting point of the fluorine-based binder may also be adjusted. The melting point of the fluorine-based binder may be in a range of 100 °C to 140 °C. Preferably, the melting point of the fluorine-based binder may be in a range of 105 °C to 135 °C. More preferably, the melting point of the fluorine-based binder may be in a range of 110 °C to 130 °C. Even more preferably, the melting point of the fluorine-based binder may be in a range of 115 °C to 125 °C.

The crosslinking agent may form a crosslinked structure by itself or together with the binder.

The crosslinked structure may be formed by bonding between the functional group of the binder and the functional group of the crosslinking agent. The crosslinking agent may have a photoreactive functional group. The crosslinked structure formed by the binder may be formed by bonding between the functional group of the binder and the photoreactive functional group. The crosslinked structure formed by the binder may be formed by applying an external force to the curable composition. Specifically, the crosslinked structure may be formed by applying heat or light to the curable composition. More specifically, the crosslinked structure may be formed by applying light to the curable composition.

The crosslinked structure may be formed by bonding at least two binders via a crosslinking agent, or by bonding the crosslinking agents to each other. Since the crosslinking agent acts as a mediator, the crosslinking agent may comprise two or more functional groups involved in the above crosslinked structure. The crosslinking agent may comprise two or more of the photoreactive functional group.

The crosslinking agent may comprise a (meth)acrylate group as the photoreactive functional group. The crosslinking agent may comprise a polyfunctional (meth)acrylate. The crosslinking agent may comprise a compound comprising at least two (meth)acrylate groups.

The (meth)acrylate group may mean an acrylate group or a methacrylate group. The (meth)acrylate group may mean a monovalent functional group derived from an ester of (meth)acrylic acid.

The crosslinking agent may comprise at least one selected from the group consisting of triethylene glycol diacrylate (TEGDA), triethylene glycol dimethacrylate (TEGDMA), polyethylene glycol diacrylate (PEGDA), trimethylolpropane triacrylate (TMPTA), trimethylolpropane trimethacrylate (TMPTMA), pentaerythritol triacrylate, pentaerythritol trimethacrylate, (poly)urethane diacrylate, (poly)urethane dimethacrylate, 1,6-hexanediol diacrylate (HDDA), and 1,6-hexanediol dimethacrylate (HDDMA). Preferably, the crosslinking agent may comprise TMPTA.

The initiator (thermal polymerization initiator or photopolymerization initiator) can form the crosslinked structure of the polymer component derived from the binder. Preferably, the curable composition may comprise a photopolymerization initiator.

The photopolymerization initiator may comprise at least one selected from the group consisting of a short-wavelength photopolymerization initiator and a long-wavelength photopolymerization initiator.

The short-wavelength photopolymerization initiator may comprise at least one selected from the group consisting of IRGACURE 127 (1,1'-(Methylene-di-4,1-phenylene)bis[2-hydroxy-2-methyl-1-propanone]), IRGACURE 1173 (2-Hydroxy-2-methylpropiophenone, HMPP), DMPA (2,2-dimethoxy-2-phenylacetonephenone), HOMPP (2-hydroxy-2-methylpropipphenone), and LAP (Lithium phenyl-2,4,6-trimethylbenzoylphosphinate).

The long-wavelength photopolymerization initiator may comprise at least one selected from the group consisting of Bis(2,4,6-trimethylbenzoyl)-phenylphosphineoxide and Ethyl (2,4,6-trimethylbenzoyl) pheny1phosphinate.

The electrolyte solution may be impregnated in the binder, specifically the polymer component, more specifically the polymeric crosslinked structure formed by the binder. The electrolyte solution may comprise a non-aqueous solvent, a lithium salt, and an electrolyte additive. The lithium salt may be dissolved in the non-aqueous solvent.

The non-aqueous solvent may refer to an organic solvent that does not contain water or contains water in a trace amount even if water is included. The non-aqueous solvent may comprise at least one selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and gamma butyrolactone (γ-butyrolactone).

As the solvent of the electrolyte solution of a lithium secondary battery, a carbonate-based solvent may generally be used. The non-aqueous solvent may comprise at least one selected from the group consisting of propylene carbonate (PC), ethylene carbonate (EC), diethyl carbonate (DEC), dimethyl carbonate (DMC), and dipropyl carbonate (DPC).

Preferably, the non-aqueous solvent may comprise ethylene carbonate and ethyl methyl carbonate. More preferably, the non-aqueous solvent may comprise ethylene carbonate and ethyl methyl carbonate, and the non-aqueous solvent may comprise more ethyl methyl carbonate than ethylene carbonate.

The lithium salt may refer to a material that decomposes into lithium cations and anions upon dissociation. The lithium salt may comprise at least one selected from the group consisting of LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, and LiC(CF₂SO₂)₃. Preferably, the lithium salt may comprise LiN(CF₃SO₂)₂.

The electrolyte additive may refer to a substance applied in a small amount to an electrolyte solution for purposes such as stabilization of the electrode interface, improvement of electrochemical stability, adjustment of conductive properties, improvement of temperature characteristics, and suppression of gas generation. The electrolyte additive may comprise at least one selected from the group consisting of vinylene carbonate (Vinylene Carbonate), 1,3-propane sultone (1,3-propane sultone), 1,3-propene sultone (1,3-propene sultone), lithium difluorophosphate (Lithium Difluorophosphate), lithium tetrafluoro(oxalato)phosphate (Lithium Tetrafluoro(oxalate)phosphate), lithium bis(fluorosulfonyl)imide (Lithium Bis(fluorosulfonyl)imide), fluoroethylene carbonate (Fluoro Ethylene Carbonate), and vinyl ethylene carbonate (Vinyl Ethylene Carbonate). Preferably, the electrolyte additive may comprise vinylene carbonate.

Since the electrolyte solution is impregnated in the binder or the crosslinked structure formed by the binder in the active layer, the thickness of the active layer may generally be thick. Specifically, the active layer may be thicker than the substrate layer. The thickness of the active layer means the thickness per layer.

In addition, the curable composition may be impregnated in the pores of the substrate layer. Therefore, at least a part of the active layer comprising the cured product of the curable composition may be impregnated in the pores of the substrate layer.

As a method of forming the active layer on the substrate layer, a UV curing method may be applied. The UV curing method is a method of forming a crosslinked structure between binder and binder, between binder and crosslinking agent, or between crosslinking agent and crosslinking agent by an external force. According to the UV curing method, the dispersion process of the binder and the inorganic particles and the impregnation process of the electrolyte solution may proceed in the same step.

The UV curing method may comprise the following steps. The number of each step does not refer to the order of each step:
(1) preparing the curable composition;
(2) applying the curable composition on one side or both sides of the substrate layer; and
(3) irradiating UV to the curable composition.

In the (1) process, the preparation of the curable composition may include directly preparing the curable composition or applying a previously prepared curable composition.

Conditions such as the application method and thickness of the curable composition are not particularly limited.

The conditions of UV irradiated to the curable composition are not particularly limited.

Another embodiment of the present invention is also a composite electrolyte.

In the description of the composite electrolyte mentioned in the composite electrolyte of this embodiment, contents that overlap with the description of the composite electrolyte of the previous embodiment may be omitted.

The composite electrolyte of this embodiment may comprise a substrate layer and an active layer disposed on one side or both sides of the substrate layer.

In the composite electrolyte of this embodiment, the substrate layer is the same as that mentioned in the composite electrolyte of the previous embodiment.

The composite electrolyte of the previous embodiment may mainly deal with the curable composition used to form the active layer. The composite electrolyte of this embodiment may mainly deal with the active layer itself.

In the composite electrolyte of this embodiment, the active layer may comprise inorganic particles, a polymeric crosslinked structure, and an electrolyte solution.

The polymeric crosslinked structure may be formed by the crosslinking reaction of the binder, the crosslinking agent, and the initiator of the aforementioned curable composition. The polymeric crosslinked structure may comprise components derived from each of the binder, the crosslinking agent, and the initiator.

In the present document, a component derived from a specific substance may comprise the component itself or a derivative thereof.

The electrolyte solution may be impregnated in the polymeric crosslinked structure.

The inorganic particles may comprise a plurality of different inorganic particles. The inorganic particles may comprise first inorganic particles and second inorganic particles. The first inorganic particles may be different from the second inorganic particles. The description of the two different inorganic particles is the same as described in the composite electrolyte of the previous embodiment.

In the composite electrolyte of this embodiment, the true density of the first inorganic particles may be equal to or less than the true density of the second inorganic particles, similar to the composite electrolyte of the previous embodiment.

The chemical compositions of the first inorganic particles and the second inorganic particles are also the same as those mentioned in the composite electrolyte of the previous embodiment.

Preferably, the first inorganic particles may comprise a lithium aluminum titanium phosphate (LATP)-based compound.

Preferably, the second inorganic particles may comprise alumina (Al₂O₃) or boehmite (AlO(OH)). More preferably, the second inorganic particles may comprise boehmite (AlO(OH)).

The shapes of the first inorganic particles and the second inorganic particles are also the same as those mentioned in the composite electrolyte of the previous embodiment.

The first inorganic particles may be polygonal inorganic particles.

The second inorganic particles may be polygonal inorganic particles, needle-shaped inorganic particles, or plate-shaped inorganic particles. Preferably, the the second inorganic particles may be needle-shaped inorganic particles or plate-shaped inorganic particles.

As described above, since the electrolyte solution is impregnated in the polymeric crosslinked structure in the active layer, the thickness of the active layer may generally be thick. Specifically, the active layer may be thicker than the substrate layer. The thickness of the active layer means the thickness per layer.

Another embodiment of the present invention relates to a battery.

In particular, the battery may refer to a lithium secondary battery. The lithium secondary battery may refer to a lithium metal secondary battery, a lithium ion secondary battery, a lithium polymer secondary battery, a lithium ion polymer secondary battery, and the like. More specifically, the battery may be a lithium ion secondary battery.

The battery may comprise a first electrode, a second electrode, a separator, and an electrolyte solution. The separator may be disposed between the first electrode and the second electrode. The polarity of the first electrode may be opposite to the polarity of the second electrode. That is, if the first electrode is the positive electrode (negative electrode), the second electrode may be the negative electrode (positive electrode).

The system formed by the separator and the electrolyte solution may be the composite electrolyte of the present invention. Therefore, in the description of the battery, the description of the separator and the electrolyte solution may be entirely replaced with the aforementioned composite electrolyte.

The positive electrode may be an electrode that performs a reduction reaction during discharging. The negative electrode may be an electrode that performs an oxidation reaction during discharging.

The electrode of the battery may comprise an electrode active material attached to an electrode current collector. Specifically, the electrode may comprise an electrode current collector and an electrode active material layer disposed on one side or both sides of the electrode current collector and comprising an electrode active material.

Among the electrode active materials, the positive electrode active material may comprise a lithium intercalation material. The lithium intercalation material may comprise a lithium transition metal oxide. The lithium intercalation material may comprise at least one selected from the group consisting of lithium manganese oxide, lithium cobalt oxide, lithium nickel oxide, lithium iron oxide, lithium nickel-manganese oxide, lithium nickel-cobalt oxide, and lithium nickel-manganese-cobalt oxide.

Among the electrode active materials, the negative electrode active material may comprise a lithium intercalation material. The lithium intercalation material may comprise at least one selected from the group consisting of lithium-based metals including lithium metal and lithium alloy; and carbon-based compounds including carbon, petroleum coke, activated carbon, and graphite.

The positive electrode current collector may be a foil of a metal comprising at least one selected from the group consisting of aluminum and nickel.

The negative electrode current collector may be a foil of a metal comprising at least one selected from the group consisting of copper, gold, and nickel.

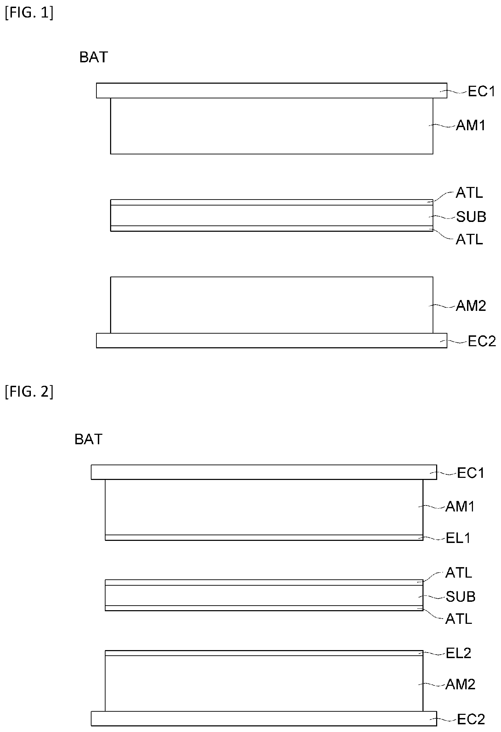

FIG. 1 is a schematic view of an exemplary battery of the present invention.

Referring to FIG. 1, the battery (BAT) of the present invention may comprise the first electrode, the second electrode, a composite electrolyte between the first electrode and the second electrode, and an electrolyte solution (not shown) injected therein.

Referring to FIG. 1, the first electrode may comprise a first electrode current collector (EC1) and a first electrode active material layer (AM1) disposed on one side or both sides of the first electrode current collector (EC1). The first electrode active material layer (AM1) may comprise a first electrode active material.

Referring to FIG. 1, the second electrode may comprise a second electrode current collector (EC2) and a second electrode active material layer (AM2) disposed on one side or both sides of the second electrode current collector (EC2). The second electrode active material layer (AM2) may comprise a second electrode active material.

The composite electrolyte may comprise the composite electrolyte of the previous embodiment. Referring to FIG. 1, the composite electrolyte may comprise a substrate layer (SUB) and an active layer (ATL) disposed on one side or both sides of the substrate layer (SUB). The composite electrolyte may be disposed between the first electrode active material layer (AM1) and the second electrode active material layer (AM2).

The description of each of the substrate layer (SUB) and the active layer (ATL) is the same as the description of each of the substrate layer and the active layer of the composite electrolyte of the previous embodiment.

The active layer (ATL) may comprise first inorganic particles, second inorganic particles, a first polymeric crosslinked structure, and a first electrolyte solution impregnated in the first polymeric crosslinked structure.

The description of each of the first inorganic particles and the second inorganic particles is the same as the description of each of the first inorganic particles and the second inorganic particles of the composite electrolyte of the previous embodiment.

The description of each of the first polymeric crosslinked structure and the first electrolyte solution is the same as the description of each of the polymeric crosslinked structure and the electrolyte solution of the composite electrolyte of the previous embodiment. FIG. 2 is a schematic view of another exemplary battery (BAT) of the present invention.

Referring to FIG. 2, the battery (BAT) of the present invention may comprise the first electrode, the second electrode, the composite electrolyte between the first electrode and the second electrode, and electrolyte layers (EL1, EL2). The first electrode and the second electrode may be composited with a gel electrolyte. The first electrode may comprise a first electrode current collector (EC1) and a first electrode active material layer (AM1) disposed on one side or both sides of the first electrode current collector (EC1). The first electrode active material layer (AM1) may comprise a first electrode active material. The electrolyte layer (EL1, EL2) may be disposed between the first electrode active material layer (AM1) and the active layer (ATL) and between the second electrode active material layer (AM2) and the active layer (ATL).

Referring to FIG. 2, the active layer (ATL) may comprise a first polymeric crosslinked structure and a first electrolyte solution impregnated in the first polymeric crosslinked structure. The electrolyte layer (EL1, EL2) may comprise a second polymeric crosslinked structure and a second electrolyte solution impregnated in the second polymeric crosslinked structure.

The compositions of the first polymeric crosslinked structure and the second polymeric crosslinked structure may be the same as or different from each other. Preferably, the compositions of the first polymeric crosslinked structure and the second polymeric crosslinked structure may be different. More preferably, the first polymeric crosslinked structure may comprise components derived from a binder, a crosslinking agent, and an initiator, and the second polymeric crosslinked structure may comprise components derived from a crosslinking agent and an initiator.

The description of each of the binder, the crosslinking agent, and the initiator is the same as the description of each of the binder, the crosslinking agent, and the initiator of the composite electrolyte of the previous embodiment.

The compositions of the first electrolyte solution and the second electrolyte solution may be the same as or different from each other. Preferably, the compositions of the first electrolyte solution and the second electrolyte solution may be the same.

Referring to FIG. 2, the first electrode active material layer (AM1) and the second electrode active material layer (AM2) may each independently further comprise the second polymeric crosslinked structure and a second electrolyte solution impregnated in the second polymeric crosslinked structure.

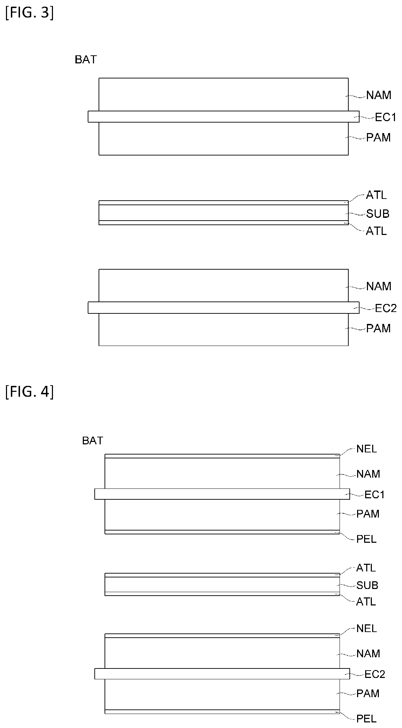

FIG. 3 is a schematic view of yet another exemplary battery (BAT) of the present invention. The battery (BAT) may be a bipolar battery. In a bipolar battery, the bipolar electrode may comprise a positive electrode (negative electrode) on one side of the current collector and a negative electrode (positive electrode) on the other side. The bipolar battery may comprise a separator disposed between sequentially stacked bipolar electrodes. The present invention may comprise the composite electrolyte of the present invention as the separator.

Referring to FIG. 3, the first electrode may comprise a first electrode current collector (EC1), a positive electrode active material layer (PAM) disposed on one side of the first electrode current collector (EC1), and a negative electrode active material layer (NAM) disposed on the other side of the first electrode current collector (EC1).

Referring to FIG. 3, the second electrode may comprise a second electrode current collector (EC2), a positive electrode active material layer (PAM) disposed on one side of the second electrode current collector (EC2), and a negative electrode active material layer (NAM) disposed on the other side of the second electrode current collector (EC2).

The positive electrode active material layer (PAM) may comprise a positive electrode active material. The negative electrode active material layer (NAM) may comprise a negative electrode active material.

Referring to FIG. 3, the first electrode and the second electrode may be sequentially stacked. The composite electrolyte may be disposed between the first electrode and the second electrode in the structure formed by the first electrode and the second electrode. Specifically, the composite electrolyte may be disposed between the positive electrode active material layer (PAM) of the first electrode and the negative electrode active material layer (NAM) of the second electrode, between the negative electrode active material layer (NAM) of the first electrode and the positive electrode active material layer (PAM) of the second electrode, or between the positive electrode active material layer (PAM) of the first electrode and the negative electrode active material layer (NAM) of the second electrode and between the negative electrode active material layer (NAM) of the first electrode and the positive electrode active material layer (PAM) of the second electrode.

The battery, specifically the bipolar battery, may further comprise an electrolyte layer (PEL, NEL) disposed between the first electrode and the active layer (ATL), between the second electrode and the active layer (ATL), or between the first electrode and the active layer (ATL) and between the second electrode and the active layer (ATL).

FIG. 4 is a schematic view of yet another exemplary battery (BAT) of the present invention. Specifically, the battery (BAT) of the present invention is a bipolar battery in which each electrode is composited with a gel electrolyte.

Referring to FIG. 4, the first electrode may comprise a first electrode current collector (EC1), a positive electrode active material layer (PAM) disposed on one side of the first electrode current collector (EC1), and a negative electrode active material layer (NAM) disposed on the other side of the first electrode current collector (EC1).

Referring to FIG. 4, the second electrode may comprise a second electrode current collector (EC2), a positive electrode active material layer (PAM) disposed on one side of the second electrode current collector (EC2), and a negative electrode active material layer (NAM) disposed on the other side of the second electrode current collector (EC2).

The positive electrode active material layer (PAM) may comprise a positive electrode active material. The negative electrode active material layer (NAM) may comprise a negative electrode active material.

Referring to FIG. 4, the positive electrode electrolyte layer (PEL) may be disposed on the opposite side of the first electrode current collector (EC1) with respect to the positive electrode active material layer (PAM). The negative electrode electrolyte layer (NEL) may be disposed on the opposite side of the first electrode current collector (EC1) with respect to the negative electrode active material layer (NAM).

Referring to FIG. 4, the positive electrode electrolyte layer (PEL) may be disposed on the opposite side of the second electrode current collector (EC2) with respect to the positive electrode active material layer (PAM). The negative electrode electrolyte layer (NEL) may be disposed on the opposite side of the second electrode current collector (EC2) with respect to the negative electrode active material layer (NAM).

Referring to FIG. 4, the positive electrode active material layer (PAM), the negative electrode active material layer (NAM), and the electrolyte layer (PEL, NEL) may each independently further comprise the second polymeric crosslinked structure and a second electrolyte solution impregnated in the second polymeric crosslinked structure. The description of the second polymeric crosslinked structure and the second electrolyte solution is the same as described above.

The first electrode current collector (EC1) and the second electrode current collector (EC2) may each independently comprise at least one selected from the group consisting of aluminum, copper, gold, and nickel.

### MODE FOR CARRYING OUT THE INVENTION

Hereinafter, the present document describes the present invention in more detail with Examples and Comparative Examples. However, the present document does not limit the present invention to the Examples.

### [Test Methods]

### 1. SEM photographing of inorganic particles

The shape and size of the inorganic particles used in the preparation of the composite electrolytes of the Examples and Comparative Examples were confirmed by SEM images. The SEM images were photographed by the following procedure.
(1) A dispersion in which 5 wt% of inorganic particles were dispersed in ethanol by ultrasonication (using UCP-10 of Lab Companion, 300 W, 40 kHz, 10 minutes, 25 °C) is prepared.
(2) 1 mL of the dispersion was applied with a dropper onto a substrate film (36 µm PET) and dried in a convection oven (no nitrogen or vacuum treatment, 80 °C, 10 minutes).
(3) The dried film was attached to the SEM equipment (FESEM-JSM7610F-plus, JEOL Co.) holder via carbon tape (T01-215-015 of NISSHIN EM Co., Ltd.).
(4) Images were photographed with the SEM equipment (acceleration voltage: 5 kV, working distance: 8.3-8.5 mm, SEM mode, magnification: 30,000 or 50,000).
(5) The shape of the inorganic particles confirmed in the obtained SEM images was determined in the following manner. IMAGE J software was used. 50 inorganic particles were selected per SEM image.
   1) Needle-shaped particles: when the maximum length, maximum width, and maximum thickness are L, W, and T respectively, those with L/W or L/T of 3 or more
   2) Plate-shaped particles: when the maximum length, maximum width, and maximum thickness of the particles are L, W, and T respectively, those with L/T or W/T of 3 or more
   3) Polygonal particles: when the maximum length, maximum width, and maximum thickness are L, W, and T respectively, those with L/W and W/T each in a range of 1 to 3
(6) The size of the inorganic particles confirmed in the obtained SEM images was measured in the following manner. IMAGE J software was used. 50 inorganic particles were selected per SEM image.
   1) Needle-shaped particles or plate-shaped particles: the average longitudinal length is determined as the average of the maximum length of each inorganic particle with respect to the number of inorganic particles. The average transverse length is determined as the average of the length in the direction perpendicular to the maximum length of each inorganic particle with respect to the number of inorganic particles.
   2) Polygonal particles: the average size is determined as the average of the maximum length of each inorganic particle with respect to the number of inorganic particles.

### 2. Green density measurement of inorganic particles

The green density of the inorganic particles was measured according to the following procedure.
(1) The inorganic particles are pretreated by vacuum drying (80 °C, 6 hours) and subsequent aging (Aging; 25 °C, 7 days).
(2) 1 g of the pretreated inorganic particles is introduced into a cylindrical mold with a diameter of 16 mm.
(3) Subsequently, a pressure of 1 ton/cm² is applied to the cylindrical mold to prepare a specimen in the form of a green pellet. The pressure application conditions are as follows.
   Pressure application equipment: CARVER Co. hydraulic press 4386,
   Applied load holding time: 30 seconds
   Number of compressions: 1 time
(4) The thickness at the center of the specimen is measured 3 times with Mitutoyo's CD-15APX, and the volume of the specimen is calculated.
(5) The green density of the inorganic particles is calculated using the volume of the specimen measured in (4) above and the weight of the specimen (1 g).

### 3. Ionic conductivity test of the composite electrolyte

The ionic conductivity of the composite electrolyte samples of the Examples and Comparative Examples was calculated through electrical resistance measurement using electrochemical impedance spectroscopy (EIS) and conversion using the Nyquist plot method. The electrical resistance measurement was performed under AC voltage conditions of an amplitude of 10 mV and a frequency of 1,000,000 to 1,000 Hz. The ionic conductivity value was calculated as the average of the measured values for 5 samples of each.

### 4. Capacity and cycle performance of the battery cell made with the composite electrolyte

(1) Cycling of the lithium secondary batteries prepared in the Examples and Comparative Examples was performed. The cycling was performed at room temperature and 2.5 to 4.2 V at 0.1 C-rate.
(2) Subsequently, cycling was repeated 10 times, and the charge capacity, discharge capacity, and discharge capacity retention were measured by the capacity retention measured at this time.

### [Preparation of composite electrolyte and lithium secondary battery comprising the same]

### Example 1. Composite electrolyte and lithium secondary battery

### 1. Composite electrolyte

(1) Polygonal LATP (LATP300 of Ganfeng Lithium, true density: 2.92 g/cm³; green density: 1.42 g/cm³; average size: 324 nm) as the first inorganic particles and needle-shaped boehmite (NNB of Aramis, AlO(OH); true density: 3.03 g/cm³; green density: 1.15 g/cm³; average transverse length: 49 nm; average longitudinal length: 597 nm) as the second inorganic particles are prepared.
(2) A dispersion in which a mixture of 7 g of the first inorganic particles and 3 g of the second inorganic particles is dispersed in 85 g of an electrolyte solution is prepared.
(3) As the electrolyte solution, one in which 1 M LiTFSI and 2 wt% of vinylene carbonate (VC) are dissolved in a non-aqueous organic solvent obtained by mixing ethylene carbonate (EC) and ethyl methyl carbonate (EMC) in a volume ratio of 3:7 is used.
(4) 2.5 g of PVDF-HFP (Kynar 2501, Arkema Co.) as a polymer and 2.5 g of TMPTA as a crosslinking agent are added to the dispersion. Subsequently, the dispersion is stirred with a homogenizer, and 0.025 g of HMPP as a photopolymerization initiator is added thereto to obtain a coating solution with a solid content of 15%.
(5) The coating solution is applied to the upper and lower sides of a polyethylene-based film (SW310H of SENIOR) with a thickness of 10 µm with a dual slot die. Subsequently, a composite electrolyte with a total thickness of 100 µm is obtained through curing by UV irradiation.
(6) The composite electrolyte is punched into a size of 32 mm x 44 mm.

### 2. Battery

### (1) Positive electrode

1) A mixture composed of 94 wt% of LiNiCoMnO₂ (Ni:Co:Mn=8:1:1) as the positive electrode active material, 3 wt% of conductive carbon black (Super P; IMERYS Graphite & Carbon) as the conductive material, and 3 wt% of polyvinylidene fluoride having a weight average molecular weight of about 800,000 as the binder is prepared. A slurry in which the mixture is uniformly dispersed in NMP is obtained.
2) The slurry is applied to one side of an aluminum current collector, and then dried and rolled to prepare a positive electrode plate in which the positive electrode active material layer is laminated.
3) The positive electrode plate is punched into a size of 30 mm x 42 mm.

### (2) Negative electrode

1) A negative electrode material composition composed of 95.6 wt% of a material composed of 90 wt% of a graphite-based material in which artificial graphite and natural graphite are mixed in a weight ratio of 3:7 and 10 wt% of SiO as the negative electrode active material; 1 wt% of acetylene black as the conductive material; 1.1 wt% of carboxymethyl cellulose (CMC) as the first binder; and 2.3 wt% of styrene butadiene rubber (SBR) as the second binder is prepared.
2) The negative electrode material composition is applied with a comma coater on one side of a copper current collector with a thickness of 8 µm, and then dried and rolled to prepare a negative electrode plate in which the negative electrode active material layer is laminated. The porosity and thickness of the negative electrode active material layer were 24% and 44 µm, respectively.
3) The negative electrode plate is punched into a size of 31 mm x 43 mm.

### (3) Assembly of the lithium secondary battery

An electrode assembly with a structure in which the positive electrode active material layer of the positive electrode plate and the negative electrode active material layer of the negative electrode plate are arranged to face each other and the composite electrolyte is disposed between the positive electrode active material layer and the negative electrode active material layer is prepared. This electrode assembly is housed in a pouch, and an electrolyte solution is injected thereto to complete the lithium secondary battery. The electrolyte solution is the same as that used for preparation of the composite electrolyte. 5 lithium secondary battery samples were prepared. The performance of the lithium secondary battery is the arithmetic mean value of the 5 samples.

### Example 2. Composite electrolyte and lithium secondary battery

The same procedure as Example 1 was repeated, except that during the preparation of the composite electrolyte, a dispersion in which a mixture of 9 g of the first inorganic particles and 1 g of the second inorganic particles is dispersed in 85 g of the electrolyte solution is prepared.

### Example 3. Composite electrolyte and lithium secondary battery

The same procedure as Example 1 was repeated, except that during the preparation of the composite electrolyte, a dispersion in which a mixture of 5 g of the first inorganic particles and 5 g of the second inorganic particles is dispersed in 85 g of the electrolyte solution is prepared.

### Example 4. Composite electrolyte and lithium secondary battery

The same procedure as Example 1 was repeated, except that during the preparation of the composite electrolyte, polygonal alumina (AES-11 of Sumitomo, true density: 3.95 g/cm³; green density: 2.06 g/cm³; average size: 436 nm) is used as the second inorganic particles, and a dispersion in which a mixture of 7 g of the first inorganic particles and 3 g of the second inorganic particles is dispersed in 85 g of the electrolyte solution is prepared.

### Comparative Example 1. Composite electrolyte and lithium secondary battery

The same procedure as Example 1 was repeated, except that during the preparation of the composite electrolyte, a dispersion in which 10 g of the first inorganic particles is dispersed in 85 g of the electrolyte solution is prepared.

### Comparative Example 2. Composite electrolyte and lithium secondary battery

The same procedure as Example 1 was repeated, except that during the preparation of the composite electrolyte, a dispersion in which 10 g of the second inorganic particles is dispersed in 85 g of the electrolyte solution is prepared.

### Comparative Example 3. Composite electrolyte and lithium secondary battery

The same procedure as Example 1 was repeated, except that during the preparation of the composite electrolyte, a dispersion in which 10 g of polygonal alumina (AES-11 of Sumitomo, true density: 3.95 g/cm³; green density: 2.06 g/cm³; average size: 436 nm) is dispersed in 85 g of the electrolyte solution is prepared.

### [Results and Discussion]

### 1. SEM images of inorganic particles

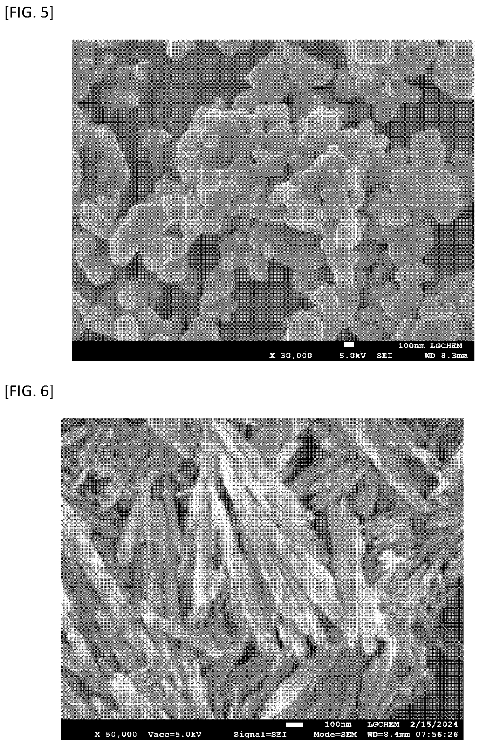

FIG. 5 is an SEM image of the first inorganic particles used in an Example of the present invention. Referring to FIG. 5, it is confirmed that the first inorganic particles are polygonal and the average size thereof is 324 nm.

FIG. 6 is an SEM image of the second inorganic particles used in an Example of the present invention. Referring to FIG. 6, it is confirmed that the second inorganic particles are needle-shaped and the transverse length thereof is 49 nm and the transverse length thereof is 597 nm.

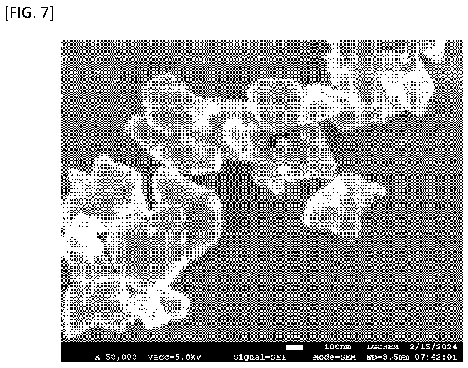

FIG. 7 is an SEM image of another second inorganic particles used in an Example of the present invention. Referring to FIG. 7, it is confirmed that the second inorganic particles are polygonal and the average size thereof is 436 nm.

### 2. Green density measurement of inorganic particles

The green density of the first inorganic particles was measured to be 1.42 g/cm³. The green density of the second inorganic particles was measured to be 0.99 g/cm³. The green density of the second inorganic particles used in Example 4 was measured to be 2.06 g/cm³.

### 3. Ionic conductivity test of the composite electrolyte

The ionic conductivity of the composite electrolytes prepared in the Examples and Comparative Examples is shown in Table 1 below.

**[Table 1]**

| | | Resistance | Ionic conductivity |
|---|---|---|---|
| | | Ohm | mS/cm |
| Example | 1 | 0.94 | 1.85 |
| Example | 2 | 1.12 | 1.55 |
| Example | 3 | 1.46 | 1.19 |
| Example | 4 | 1.32 | 1.35 |
| Comparative Example | 1 | 1.23 | 1.42 |
| Comparative Example | 2 | 1.76 | 0.99 |
| Comparative Example | 3 | 1.65 | 1.06 |

### 4. Capacity and cycle performance of the lithium secondary battery

The capacity and cycle performance of the lithium secondary batteries prepared in the Examples and Comparative Examples are shown in Table 2 below.

**[Table 2]**

| | | 1st Cycle | 1st Cycle | 10th Cycle | 10th Cycle | 10 Cycle Retention |
|---|---|---|---|---|---|---|
| | | Discharge capacity | Charge capacity | Discharge capacity | Charge capacity | Discharge capacity retention |
| | | mAh/g | mAh/g | mAh/g | mAh/g | % |
| Example | 1 | 43.2 | 44.3 | 43.1 | 44.1 | 99.8 |
| Example | 2 | 43.1 | 44.4 | 42.6 | 44.3 | 98.8 |
| Example | 3 | 42.0 | 44.4 | 39.6 | 44.0 | 94.2 |
| Example | 4 | 41.3 | 43.0 | 36.6 | 43.1 | 88.6 |
| Comparative Example | 1 | 41.9 | 42.8 | 37.9 | 42.8 | 90.5 |
| Comparative Example | 2 | 41.1 | 43.4 | 36.1 | 43.3 | 87.8 |
| Comparative Example | 3 | 40.7 | 44.1 | 36.4 | 44.1 | 89.4 |

Referring to Tables 1 and 2 above, it is confirmed that the lithium secondary batteries of the Examples have excellent capacity and lifespan characteristics. In particular, it is confirmed that Examples 1 to 3 exhibit superior performance compared to the Comparative Examples. This may be because the high ionic conductivity between the composite electrolyte and the electrode active material layer of the Examples reduces the interfacial resistance.

Referring to Tables 1 and 2 above, it is confirmed that the lithium secondary batteries of the Comparative Examples do not have sufficient long-term lifespan characteristics. This may be because the inferior electrolyte impregnation property of the composite electrolytes of the Comparative Examples does not smoothly conduct ions.

## Claims

1. A composite electrolyte, comprising:
a substrate layer; and
an active layer disposed on one side or both sides of the substrate layer, and comprising a curable composition;
wherein the curable composition comprises first inorganic particles, second inorganic particles, a binder, a crosslinking agent, an initiator, and an electrolyte solution,
and the true density of the first inorganic particles is equal to or less than the true density of the second inorganic particles.

2. The composite electrolyte of claim 1, wherein
the green density of the first inorganic particles is greater than the green density of the second inorganic particles, and
the total content [wt%] of the first inorganic particles and the second inorganic particles in the curable composition is greater than the binder content [wt%] in the curable composition.

3. The composite electrolyte of claim 1, wherein
the active layer comprises a cured product of the curable composition.

4. The composite electrolyte of claim 1, wherein
the content of the second inorganic particles in the curable composition is 5 wt% or more of the total content of the first inorganic particles and the second inorganic particles in the curable composition.

5. The composite electrolyte of claim 1, wherein
the average size of the first inorganic particles is in a range of 100 nm to 500 nm,
the average longitudinal length of the second inorganic particles is in a range of 300 nm to 800 nm, and
the average transverse length of the second inorganic particles is in a range of 25 nm to 80 nm.

6. The composite electrolyte of claim 1, wherein
the binder comprises a fluorine-based binder.

7. The composite electrolyte of claim 6, wherein
the fluorine-based binder comprises a first unit derived from vinylidene fluoride and a second unit derived from a fluorine-containing alkyl vinyl compound,
the content of the second unit of the fluorine-based binder is in a range of 10 wt% to 50 wt%, and the weight average molecular weight of the fluorine-based binder is in a range of 300,000 g/mol to 1,000,000 g/mol.

8. The composite electrolyte of claim 1, wherein
the crosslinking agent comprises a polyfunctional (meth)acrylate.

9. The composite electrolyte of claim 1, wherein
the initiator comprises a photopolymerization initiator.

10. The composite electrolyte of claim 1, wherein
the electrolyte solution comprises a non-aqueous solvent, a lithium salt, and an electrolyte additive,
the non-aqueous solvent comprises ethylene carbonate and ethyl methyl carbonate,
the lithium salt comprises LiN(CF₃SO₂)₂, and
the electrolyte additive comprises vinylene carbonate.

11. A composite electrolyte, comprising:
a substrate layer; and
an active layer disposed on one side or both sides of the substrate layer;
wherein the active layer comprises first inorganic particles, second inorganic particles, a polymeric crosslinked structure, and an electrolyte solution impregnated in the polymeric crosslinked structure,
and the true density of the first inorganic particles is equal to or less than the true density of the second inorganic particles.

12. The composite electrolyte of claim 11, wherein
the substrate layer comprises a porous polyolefin-based film.

13. The composite electrolyte of claim 11, wherein
the first inorganic particles comprise a lithium aluminum titanium phosphate (LATP)-based compound, and
the second inorganic particles comprise boehmite (AlO(OH)).

14. The composite electrolyte of claim 11, wherein
the first inorganic particles are polygonal inorganic particles, and
the second inorganic particles are plate-shaped inorganic particles or needle-shaped inorganic particles.

15. The composite electrolyte of claim 11, wherein
the thickness per layer of the active layer is greater than the thickness of the substrate layer.

16. A battery comprising a first electrode, a second electrode, and a composite electrolyte disposed between the first electrode and the second electrode,
comprising a substrate layer; and an active layer disposed on one side or both sides of the substrate layer,
wherein the active layer comprises first inorganic particles, second inorganic particles, a first polymeric crosslinked structure, and a first electrolyte solution impregnated in the first polymeric crosslinked structure,
and the true density of the first inorganic particles is equal to or less than the true density of the second inorganic particles.

17. The battery of claim 16, further comprising
an electrolyte layer disposed between the first electrode and the active layer, between the second electrode and the active layer, or between the first electrode and the active layer and between the second electrode and the active layer,
wherein the electrolyte layer comprises a second polymeric crosslinked structure and a second electrolyte solution impregnated in the second polymeric crosslinked structure.

18. The battery of claim 16, wherein
the first electrode comprises a first electrode current collector and a first electrode active material layer disposed on one side or both sides of the first electrode current collector,
the second electrode comprises a second electrode current collector and a second electrode active material layer disposed on one side or both sides of the second electrode current collector,
the first electrode active material layer comprises a first electrode active material, a second polymeric crosslinked structure, and a second electrolyte solution impregnated in the second polymeric crosslinked structure, and
the second electrode active material layer comprises a second electrode active material, a second polymeric crosslinked structure, and a second electrolyte solution impregnated in the second polymeric crosslinked structure.

19. The battery of claim 16, wherein
the first electrode comprises a first electrode current collector, a positive electrode active material layer disposed on one side of the first electrode current collector, and a negative electrode active material layer disposed on the other side of the first electrode current collector,
the second electrode comprises a second electrode current collector, a positive electrode active material layer disposed on one side of the second electrode current collector, and a negative electrode active material layer disposed on the other side of the second electrode current collector, and
the composite electrolyte is disposed between the positive electrode active material layer of the first electrode and the negative electrode active material layer of the second electrode, between the negative electrode active material layer of the first electrode and the positive electrode active material layer of the second electrode, or between the positive electrode active material layer of the first electrode and the negative electrode active material layer of the second electrode and between the negative electrode active material layer of the first electrode and the positive electrode active material layer of the second electrode.

20. The battery of claim 19, further comprising
an electrolyte layer disposed between the first electrode and the active layer, between the second electrode and the active layer, or between the first electrode and the active layer and between the second electrode and the active layer,
wherein the electrolyte layer comprises a second polymeric crosslinked structure and a second electrolyte solution impregnated in the second polymeric crosslinked structure.
